# EUROPEAN PATENT SPECIFICATION

(11) **EP 4 095 493 B1**
(45) Date of publication and mention of the grant of the patent: **09.07.2025**
(21) Application number: 21743743.3
(22) Date of filing: 14.01.2021
(51) Int. Cl.: G01F 1/00, G01F 15/06, G01F 3/22, F23K 5/00, G01F 25/10, F23N 5/24

(54) **GAS APPLIANCE FAILURE DIAGNOSIS SYSTEM**
FEHLERDIAGNOSESYSTEM FÜR EIN GASGERÄT
SYSTÈME DE DIAGNOSTIC DE DÉFAILLANCE D'APPAREIL À GAZ

(30) Priority: 20.01.2020 JP 2020006464
(43) Date of publication of application: 30.11.2022
(73) Proprietor: Panasonic Intellectual Property Management Co., Ltd., Osaka-shi, Osaka 540-6207 (JP)
(72) Inventor: SHIRASAWA, Tadanori, Osaka 540-6207 (JP); YOKOHATA, Mitsuo, Osaka 540-6207 (JP)
(74) Representative: SSM Sandmair
(86) International application number: PCT/JP2021/000958
(87) International publication number: WO 2021/149572

(56) References cited:
- JP-A- 2004 013 386
- JP-A- 2004 077 248
- JP-A- 2004 144 641
- JP-A- 2019 002 853
- JP-A- H08 296 841
- US-A1- 2018 238 772
- US-B1- 10 607 475

## Description

### TECHNICAL FIELD

The present disclosure relates to a gas appliance failure diagnosis system which diagnoses a failure in a gas appliance by using a gas meter capable of measuring an instantaneous flow rate.

### BACKGROUND ART

A conventional gas appliance failure diagnosis system includes a flow rate measuring device which detects an abnormality in a gas appliance based on a flow rate pattern obtained by measuring the flow rate of gas. The flow rate measuring device includes a new event detector which detects an unsteady behavior that is different from a behavior at a steady state at the time of operation of a gas appliance, and a transmitter which transmits a new event signal that represents the new event of the unsteady behavior detected by the new event detector to an external receiving device (see, for example, Patent Literature (PTL 1)).

### Citation List

### Patent Literature

[PTL 1] Japanese Unexamined Patent Application Publication No. 2009-41936 JP 2004 077248 A discloses a flow sensor with a high sampling rate in spite of low power consumption and a gas meter applying the same. The flow sensor installed in a flow path for a fluid is provided with pressure fluctuation detecting means arranged in the flow path for detecting pressure fluctuation in the flow path, and a flow detecting means arranged in the flow path and driven by the first sampling rate higher than before in response to pressure fluctuation detection of the pressure fluctuation detecting means. By this means, the flow detecting means with the high power consumption is usually driven by the lower sampling rate or stopped, and the pressure fluctuation detecting means with the low power consumption monitors the pressure fluctuation in the flow path. Once the pressure fluctuation is detected, the flow detecting means is driven by the higher sampling rate, which enables highly accurate detection of a flow rate waveform. Accordingly, the gas flow rate waveform when lighting a gas appliance or the like can be accurately detected while restraining the power consumption. Other examples of flow meter systems known from the prior art are disclosed in JP 2004-144641A and JP 2019-2853A with a gas flow meter in communication with a remote center device.

### SUMMARY OF THE INVENTION

The present disclosure provides a gas appliance failure diagnosis system capable of providing an appropriate instruction to the user along with information such as an error display of a gas appliance and facilitating a repair work by obtaining detailed flow rate data when the gas appliance has a problem.

A gas appliance failure diagnosis system according to the present disclosure includes a gas meter which measures the flow rate of gas consumed by a gas appliance connected downstream of the gas meter, and a center device which obtains the flow rate measured by the gas meter through communication. Moreover, gas meter includes a flow rate meter which is capable of measuring the flow rate in one of a normal measurement mode in which the flow rate is measured in a predetermined sampling period and a detailed measurement mode in which the flow rate is measured in a sampling period shorter than the predetermined sampling period in the normal measurement mode. Moreover, the center device instructs the gas meter to measure the flow rate in the detailed measurement mode, collects the flow rate data measured in the detailed measurement mode from the gas meter, and generates failure diagnosis information for diagnosing a failure in the gas appliance based on the collected flow rate data. Moreover, a communication method performed between the center device and the gas meter is a direct communication using a telephone line, a cellular communication via a base station, or a method using a multi-stage relay for wireless communication between a wireless slave unit provided in the gas meter and a master unit and internet connection.

With such a configuration, the gas appliance failure diagnosis system according to the present disclosure is capable of remotely identifying the failure part in the gas appliance by obtaining the detailed gas flow rate data through communication when the gas appliance has a problem, facilitating the repair work.

### BRIEF DESCRIPTION OF THE DRAWINGS

FIG. 1 is a block diagram of a gas appliance failure diagnosis system according to an embodiment.
FIG. 2 is a sequence flowchart for illustrating the processes performed by the gas appliance failure diagnosis system according to the embodiment.
FIG. 3A is a diagram of flow rate characteristics of consumed gas in a normal state of a gas appliance for illustrating the gas appliance failure diagnosis system according to the embodiment.
FIG. 3B is a diagram of flow rate characteristics of consumed gas of the gas appliance at the time of failure for illustrating the gas appliance failure diagnosis system according to the embodiment.
FIG. 3C is a diagram of flow rate characteristics of consumed gas at the time of failure of the gas appliance for illustrating the gas appliance failure diagnosis system in the embodiment.

### DESCRIPTION OF EMBODIMENT

### (Underlying Knowledge Forming Basis of the Present Disclosure)

Gas appliances which use gas are essential to daily life. In the case of an appliance failure, early repair of the appliance is desired. An equipped appliance, such as a gas water heater, needs to be repaired by a repair technician visiting the house where the appliance is installed, and needs to be repaired in a single visit. However, the repair technician has to be told of the failure status by telephone or the like from the user, and infer the cause of the failure only based on the failure status confirmed. The repair technician then brings the components deemed necessary to the site (where the gas water heater is installed) based on the inferred cause of the failure, and measures the gas flow rate, etc., to identify the specific failure part for repair.

A gas meter has been proposed which detects an abnormality in a gas appliance by measuring an instantaneous flow rate and detecting an unsteady flow rate pattern. Although the gas meter is capable of detecting signs of a failure, such as an ignition failure, the gas meter is not capable of identifying the specific failure part. Hence, a specific measure, such as a repair, cannot be appropriately taken.

In view of the above, the inventors have obtained the idea that the failure part of the gas appliance can be identified by using a gas meter to perform detailed measurement of the flow rate of the consumed gas of the gas appliance. However, the processing load for identifying the failure part is too heavy for the gas meter alone to perform analysis. The present disclosure has been conceived to address such a problem.

Hereinafter, an embodiment will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (Embodiment)

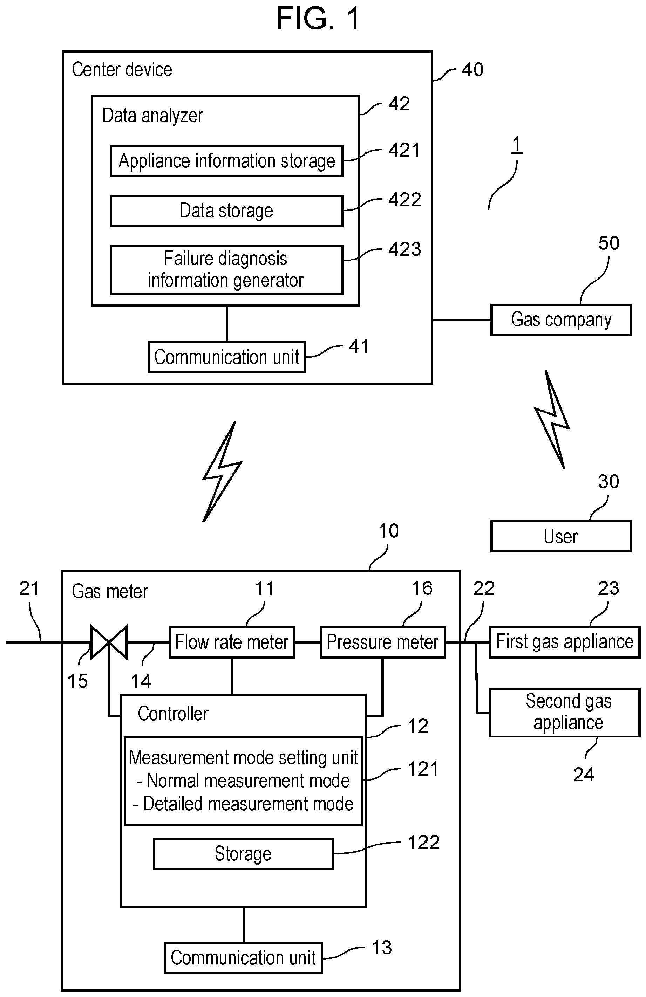

Hereinafter, an embodiment will be described with reference to FIG. 1 to FIG. 3C.

### [1-1. Configuration]

FIG. 1 illustrates a configuration of a gas appliance failure diagnosis system according to an embodiment of the present disclosure. As illustrated in FIG. 1, gas appliance failure diagnosis system 1 includes gas meter 10 and center device 40 which obtains, for example, meter values and shut-off information by communicating with gas meter 10. Gas meter 10 is installed in each home, and FIG. 1 illustrates one of a plurality of gas meters 10.

Moreover, gas meter 10 includes internal flow path 14 connected to upstream pipe 21 and downstream pipe 22. Internal flow path 14 includes flow rate meter 11 which measures the flow rate of gas, shut-off valve 15 which shuts off gas, and pressure meter 16 which measures the pressure of gas. Gas appliances (first gas appliance 23, second gas appliance 24) such as a gas water heater and a gas fan heater are connected to downstream pipe 22. Communication unit 13 communicates with center device 40 to transmit the flow rate of the gas measured by flow rate meter 11 and receive the instruction details from center device 40. Controller 12 is realized by a microcomputer, and controls flow rate meter 11, communication unit 13, shut-off valve 15, pressure meter 16, and the like.

Center device 40 includes communication unit 41 which communicates with gas meter 10 and data analyzer 42 which analyzes the flow rate data of gas meter 10 obtained by communication unit 41. Center device 40 is operated by gas company 50. For example, a fee is charged to user 30, and a response to an abnormality, such as a remote shutoff, is made based on the read value of gas meter 10 obtained by center device 40.

The communication method performed between center device 40 and gas meter 10 is not particularly limited. An appropriate method can be selected according to the installation state of gas meter 10, such as a direct communication using a telephone line, a cellular communication via a base station (not illustrated), and a method using a multi-stage relay for wireless communication between a wireless slave unit (not illustrated) provided in gas meter 10 and a master unit (not illustrated) and internet connection.

### [1-2. Operation]

### [1-2-1. Process Flow of Gas Appliance Failure Diagnosis System]

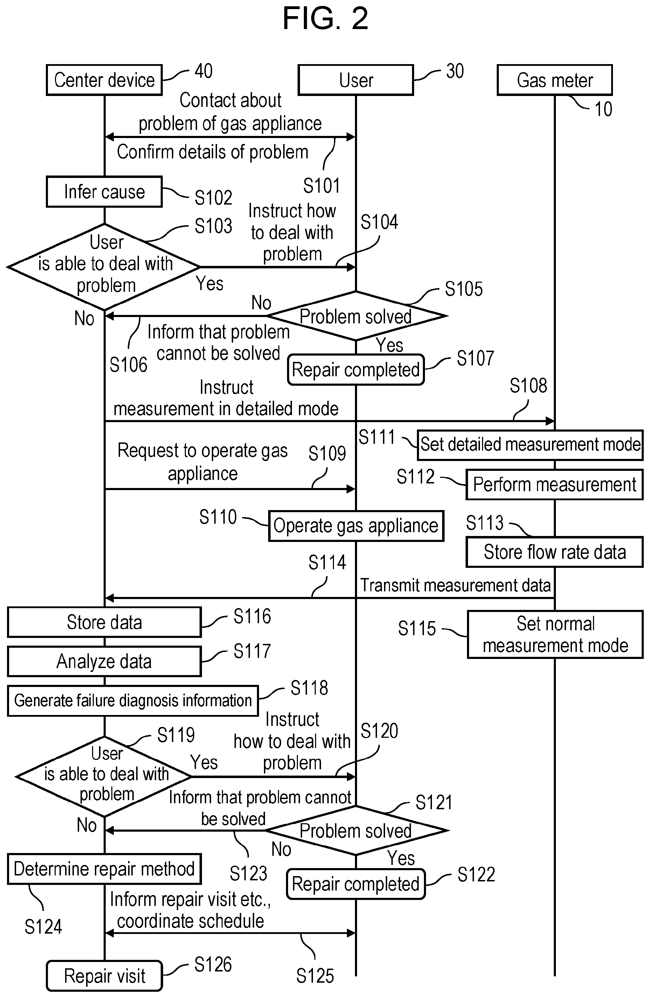

Next, a flow of failure diagnosis in the gas appliance failure diagnosis system according to the present embodiment will be described with reference to the sequence flowchart of FIG. 2 with an example where first gas appliance 23 has a problem. In the following description, center device 40 also includes operations performed by gas company 50.

Gas company 50 which operates center device 40 first receives a contact from user 30 about the problem of first gas appliance 23 by telephone or the like (step S101), confirms the details of the problem (step S101), and infers the cause of the problem (step S102). Subsequently, when gas company 50 determines that user 30 is able to deal with the problem (Yes in step S103), gas company 50 instructs user 30 how to deal with the problem (step S104). When the problem is solved by the instruction (Yes in step S105), the repair is completed (step S107).

When gas company 50 determines that user 30 is not able to deal with the problem (No in step S103), or when user 30 is not able to solve the problem and contacts gas company 50 to inform that the problem cannot be solved (Step S106) (No in step S105), conventionally, gas company 50 infers the failure part based on the information obtained by telephone or the like, and dispatches a repair technician to the site where first gas appliance 23 is installed.

On the other hand, in the present embodiment, when the problem cannot be solved by user 30, the failure part can be identified through measurement of the detailed flow rate data performed by gas meter 10. Hereinafter, the processes performed when the problem cannot be solved based on the cause inferred in step S102 will be described.

First, gas company 50 gives, through center device 40, an instruction to gas meter 10 installed at home of user 30 to measure the flow rate in a detailed measurement mode (step S108). In response to the instruction, gas meter 10 sets the measurement mode to the detailed measurement mode (step S111). Gas company 50 then requests user 30 to operate first gas appliance 23 (step S109).

When first gas appliance 23 starts an operation in response to the operation by user 30 (step S110), gas meter 10 measures the detailed flow rate of consumed gas of first gas appliance 23 (step S112) and stores the measured flow rate value in storage 122 in chronological order (step S113). When the required measurement of the flow rate data is completed, gas meter 10 transmits the stored flow rate data to center device 40 (step S114), and then sets the measurement mode to a normal measurement mode (step S115).

Center device 40 stores the flow rate data transmitted from gas meter 10 (step S116), analyzes the data based on the flow rate data and information on first gas appliance 23 (step S117), and generates failure diagnosis information of first appliance 23 (step S118). Subsequently, gas company 50 determines based on the failure diagnosis information whether or not user 30 is able to deal with the problem. When determining that user 30 is able to deal with the problem (Yes in step S119), gas company 50 instructs user 30 how to deal with the problem (step S120). When the problem can be solved by user 30 (Yes in step S121), the repair is completed (step S122).

Note that the information on the gas appliance used for analyzing the data in step S117 may include image data of the operating state of the gas appliance.

When gas company 50 determines that user 30 is not able to deal with the problem (No in step S119), or when user 30 is not able to solve the problem and contacts gas company 50 (step S123) to inform that the problem cannot be solved (No in step S121), gas company 50 determines a repair method (step S124), coordinates a repair schedule with user 30 (step S125), and visits the installation location of first gas appliance 23 with necessary components and the like for repair to repair first gas appliance 23 (Step S126).

### [1-2-2. Operation of Gas Meter]

Next, an operation of gas meter 10 will be described. Flow rate meter 11 of gas meter 10 is capable of measuring an instantaneous flow rate. Flow rate meter 11 includes two settable measurement modes which are a normal measurement mode in which the instantaneous flow rate is measured at a predetermined sampling period (for example, a sampling period of 2 seconds) with a reduced power consumption, and a detailed measurement mode in which the flow rate is measured at a sampling period (for example, a sampling period of 0.5 seconds) shorter than the predetermined sampling period in the normal measurement mode. Measurement mode setting unit 121 of controller 12 switches between the normal measurement mode and the detailed measurement mode, and normally sets the normal measurement mode.

When receiving an instruction for the detailed measurement mode in step S108 of FIG. 2 from center device 40 via communication unit 13, measurement mode setting unit 121 sets the detailed measurement mode to flow rate meter 11. Flow rate meter 11 then stores the flow rate data measured in predetermined period T in storage 122 in chronological order. Predetermined period T is a predetermined period or a period set by center device 40 to each gas appliance, and is set to a period which allows the cause of the failure of the gas appliance to be analyzed.

In addition, it is possible to minimize an increase in power consumption and reduce the memory usage by determining the start of the operation of the gas appliance based on presence or absence of the flow rate of gas, starting the detailed measurement mode after gas starts to flow, and storing the flow rate data in storage 122.

When the measurement is completed, measurement mode setting unit 121 sets the measurement mode to the normal measurement mode, and transmits the flow rate data stored in storage 122 to center device 40 via communication unit 13.

In parallel with the flow rate measurement, pressure meter 16 may measure the pressure, and the pressure data measured by pressure meter 16 may be transmitted to center device 40 together with the flow rate data.

### [1-2-3. Operation of Center Device]

Next, an operation (after step S116 in FIG. 2) of the method performed by center device 40 to identify the failure part will be described.

When receiving the flow rate data and the pressure data from gas meter 10, communication unit 41 of center device 40 stores the data in data storage 422 of data analyzer 42. Appliance information storage 421 of data analyzer 42 holds information on gas appliances (information on each model and product number of gas appliances, for example, flow rate characteristics of consumed gas in normal and abnormal states). Failure diagnosis information generator 423 of data analyzer 42 processes the flow rate data stored in data storage 422 into a flow rate graph, a table, or the like as failure diagnosis information and outputs the data. Alternatively, failure diagnosis information generator 423 may compare the flow rate characteristics of consumed gas stored in appliance information storage 421 with the flow rate characteristics of consumed gas received from gas meter 10, process a change in flow rate in a normal state and a change in flow rate in the currently obtained flow rate data into a flow rate graph or the like as failure diagnosis information, and output the data. When the pressure data is also available, the data is processed into a graph or the like and output in a similar manner.

Accordingly, gas company 50 is capable of determining whether or not the gas appliance has a failure and identifying the failure part based on the failure diagnosis information and the information on the gas appliance (details of the problem, etc.) obtained from user 30.

In addition, when the error display details of the gas appliance, a photograph or video showing the state of the combustion flame, the sound at the time of ignition, etc. can be obtained as the information on the gas appliance obtained from user 30, the failure part can be identified more reliably.

Gas company 50 then coordinates a repair visit schedule with user 30 based on the identified failure part.

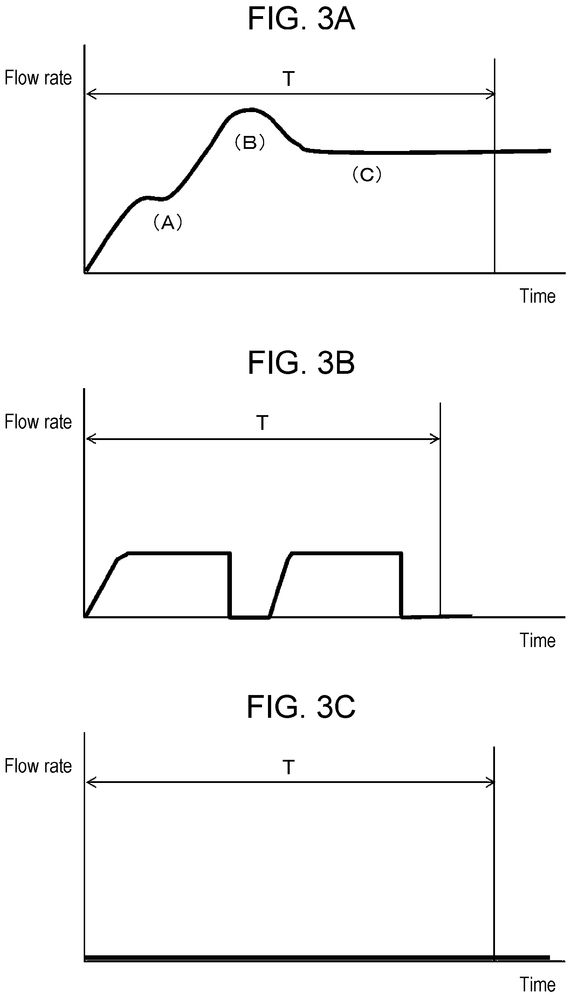

FIG. 3A to FIG. 3C illustrate examples of the flow rate characteristics of consumed gas of a gas appliance (for example, a water heater). FIG. 3A illustrates the flow rate characteristics in a normal state in which the flow rate reaches the maximum flow rate (B) after a gentle ignition (A), and becomes the stable region (C). FIG. 3B illustrates the flow rate characteristics when a gentle ignition cannot be made, and a state in which the state where the gentle ignition cannot be made within the operating time of the igniter is continued a plurality of times before stop. FIG. 3C illustrates a state in which no gas is supplied.

Accordingly, gas company 50 compares the flow rate graph generated by failure diagnosis information generator 423 of center device 40 with the characteristic data indicated in FIG. 3A to FIG. 3C. By doing so, gas company 50 is capable of identifying the failure part of the gas appliance having a failure in such a manner that the ignition system, such as an igniter, is identified as the failure part when the generated flow rate graph is similar to FIG. 3B and that the gas supply valve or its drive system is identified as the failure part when the generated flow rate graph is similar to the state of FIG. 3C.

In the present embodiment, the case where the communication with user 30 and identification of the failure part in the gas appliance are performed by gas company 50, but may be performed by a repair company different from gas company 50.

Moreover, the communication with user 30 and the identification of the failure part in the gas appliance may be incorporated into the functions of center 40.

In other words, a voice guidance may be played at the time of reception by telephone to prompt user 30 to input numbers, so that the details of the failure of the gas appliance can be understood. After instructing gas meter 10 to measure detailed data, user 30 may be instructed to operate the gas appliance, so that the detailed flow rate data is automatically obtained.

Center device 40 may store the flow rate characteristics and pressure characteristics for each model of the gas appliances in the appliance information storage. Then center device 40 may compare the flow rate data obtained through communication with the stored data to identify the failure part and generate failure diagnosis information. Moreover, it goes without saying that coordination of a visit schedule with the user can also be automated with the voice guidance on the telephone.

### [1-3. Advantageous Effects, etc.]

As described above, in gas appliance failure diagnosis system 1 according to the present embodiment, gas meter 10 includes a flow rate meter which is capable of measuring the flow rate in one of a normal measurement mode in which the flow rate is measured in a predetermined sampling period and a detailed measurement mode in which the flow rate is measured in a sampling period shorter than the predetermined sampling period in the normal measurement mode. Center device 40 instructs gas meter 10 to measure the flow rate in the detailed measurement mode, collects the flow rate data measured in the detailed measurement mode from gas meter 10, and generates failure diagnosis information for failure diagnosis of the gas appliance based on the collected flow rate data.

With this configuration, gas company 50 which operates center device 40 is capable of remotely identifying the failure part in the gas appliance based on the failure diagnosis information and the information on the gas appliance. This allows the repair to be completed within a single visit, facilitating the repair work. In addition, gas company 50 is capable of reducing the number of on-site repairs.

As in the present embodiment, it may be that in response to the instruction from center device 40, gas meter 10 detects presence of a flow and starts measuring the flow rate in the detailed measurement mode.

With this configuration, an increase in power consumption due to the detailed measurement mode can be minimized, and the memory required for storing the flow rate data can be reduced.

As in the present embodiment, gas company 50 of center device 40 may instruct gas meter 10 to measure the flow rate in the detailed measurement mode based on a contact from user 30 who owns the gas appliance.

With this configuration, it is possible to measure the flow rate in the detailed measurement mode with a large power consumption only when a problem occurs, so that an increase in power consumption of the gas meter can be reduced.

As in the present embodiment, it may be that gas meter 10 includes pressure meter 16 which measures the pressure of the gas, and that gas meter 10 transmits the measured pressure data together with the flow rate data to center device 40. It may be that center device 40 generates failure diagnosis information based on the flow rate data and the pressure data.

With this configuration, failure diagnosis information can be generated based on not only the flow rate data but also the pressure data, so that the accuracy of identification of the failure part is increased.

As in the present embodiment, the information on the gas appliance may include an image of the operating state of the gas appliance.

With this configuration, center device 40 is capable of reliably identifying the failure part.

Since the above described embodiment is to illustrate an example of the technique according to the present disclosure, various changes, replacements, additions, omissions, etc. can be made within the scope of claims.

### INDUSTRIAL APPLICABILITY

As described above, the gas appliance failure diagnosis system according to the present disclosure can be applied to failure diagnosis not only in general household gas appliances but also in commercial gas appliances.

### REFERENCE MARKS IN THE DRAWINGS

- 1: gas appliance failure diagnosis system
- 10: gas meter
- 23: first gas appliance
- 24: second gas appliance
- 40: center device

## Claims

1. A gas appliance failure diagnosis system (1) comprising:
a gas meter (10) which measure a flow rate of a gas consumed by a gas appliance (23,24) connected downstream of the gas meter (10); and
a center device (40) which obtains the flow rate measured by the gas meter (10) through a communication,
wherein the gas meter (10) includes a flow rate meter (11) which measures the flow rate in one of a normal measurement mode and a detailed measurement mode, the normal measurement mode being a mode in which the flow rate is measured in a predetermined sampling period, the detailed measurement mode being a mode in which the flow rate is measured in a sampling period shorter than the predetermined sampling period in the normal measurement mode,
the center device (40) gives an instruction to the gas meter (10) to measure the flow rate in the detailed measurement mode, collects flow rate data that is data of the flow rate measured in the detailed measurement mode from the gas meter, and generates, based on the flow rate data, failure diagnosis information for diagnosing a failure in the gas appliance (23,24), and
a communication method performed between the center device (40) and the gas meter (10) is
a direct communication using a telephone line,
a cellular communication via a base station, or
a method using a multi-stage relay for wireless communication between a wireless slave unit provided in the gas meter and a master unit and internet connection.

2. The gas appliance diagnosis system (1) according to claim 1,
wherein, in response to the instruction from the center device (40) to measure the flow rate in the detailed measurement mode, the gas meter (10) detects presence of a flow of the gas and starts measuring the flow rate in the detailed measurement mode.

3. The gas appliance diagnosis system (1) according to claim 1,
wherein the gas meter (10) includes a pressure meter (16) which measures a pressure of the gas,
the gas meter (10) transmits pressure data to the center device (40) together with the flow rate data, the pressure data being data of the pressure of the gas measured, and
the center device (40) generates the failure diagnosis information based on the flow rate data and the pressure data.

4. The gas appliance diagnosis system (1) according to claim 2,
wherein the gas meter (10) includes a pressure meter (16) which measures a pressure of the gas,
the gas meter (10) transmits pressure data to the center device (40) together with the flow rate data, the pressure data being data of the pressure of the gas measured, and
the center device (40) generates the failure diagnosis information based on the flow rate data and the pressure data.

5. The gas appliance diagnosis system (1) according to any one of claims 1 to 4,
wherein the center device (40) gives the instruction to the gas meter (10) based on a contact from a user who owns the gas appliance (23,24).

6. The gas appliance diagnosis system (1) according to any one of claims 1 to 4,
wherein information on the gas appliance (23,24) includes image data of an operating state of the gas appliance (23,24).

7. The gas appliance diagnosis system (1) according to claim 5,
wherein information on the gas appliance (23,24) includes image data of an operating state of the gas appliance (23,24).

## Patentansprüche

1. Gasgeräte-Fehlerdiagnosesystem (1), das Folgendes umfasst:
einen Gaszähler (10), der die Durchflussrate eines Gases misst, das von einem dem Gaszähler (10) nachgeschalteten Gasgerät (23, 24) verbraucht wird; und
eine Zentralvorrichtung (40), die über eine Kommunikation die vom Gaszähler (10) gemessene Durchflussrate erhält,
wobei der Gaszähler (10) einen Durchflussmesser (11) umfasst, der den Durchfluss in einem normalen Messmodus oder einem detaillierten Messmodus misst, wobei der normale Messmodus ein Modus ist, in dem der Durchfluss in einem vorgegebenen Abtastzeitraum gemessen wird, und der detaillierte Messmodus ein Modus ist, in dem der Durchfluss in einem Abtastzeitraum gemessen wird, der kürzer ist als der vorgegebene Abtastzeitraum im normalen Messmodus,
die Zentralvorrichtung (40) dem Gaszähler (10) eine Anweisung gibt, die Durchflussrate im detaillierten Messmodus zu messen, Durchflussdaten, d. h. Daten der im detaillierten Messmodus gemessenen Durchflussrate vom Gaszähler sammelt und basierend auf den Durchflussdaten Fehlerdiagnoseinformationen zur Diagnose eines Fehlers im Gasgerät (23, 24) generiert, und
ein Kommunikationsverfahren zwischen der Zentralvorrichtung (40) und dem Gaszähler (10) ist:
eine direkte Kommunikation über eine Telefonleitung,
eine Mobilfunkkommunikation über eine Basisstation oder
ein Verfahren unter Verwendung eines mehrstufigen Relais für die drahtlose Kommunikation zwischen einer im Gaszähler vorgesehenen drahtlosen Slave-Einheit und einer Master-Einheit und Internetverbindung.

2. Gasgerätediagnosesystem (1) nach Anspruch 1,
wobei der Gaszähler (10) als Reaktion auf die Anweisung von der Zentralvorrichtung (40), die Durchflussrate im detaillierten Messmodus zu messen, das Vorhandensein eines Gasflusses erkennt und mit der Messung der Durchflussrate im detaillierten Messmodus beginnt.

3. Gasgerätediagnosesystem (1) nach Anspruch 1,
wobei der Gaszähler (10) einen Druckmesser (16) umfasst, der einen Druck des Gases misst,
der Gaszähler (10) Druckdaten zusammen mit den Durchflussdaten an die Zentralvorrichtung (40) überträgt, wobei es sich bei den Druckdaten um Daten über den Druck des gemessenen Gases handelt, und
die Zentralvorrichtung (40) die Fehlerdiagnoseinformationen auf Grundlage der Durchflussdaten und der Druckdaten erzeugt.

4. Gasgerätediagnosesystem (1) nach Anspruch 2,
wobei der Gaszähler (10) einen Druckmesser (16) umfasst, der einen Druck des Gases misst,
der Gaszähler (10) Druckdaten zusammen mit den Durchflussdaten an die Zentralvorrichtung (40) überträgt, wobei es sich bei den Druckdaten um Daten über den Druck des gemessenen Gases handelt, und
die Zentralvorrichtung (40) die Fehlerdiagnoseinformationen auf Grundlage der Durchflussdaten und der Druckdaten erzeugt.

5. Gasgerätediagnosesystem (1) nach einem der Ansprüche 1 bis 4,
wobei die Zentralvorrichtung (40) die Anweisung an den Gaszähler (10) auf der Grundlage eines Kontakts von einem Benutzer gibt, der Eigentümer des Gasgeräts (23, 24) ist.

6. Gasgerätediagnosesystem (1) nach einem der Ansprüche 1 bis 4,
wobei Informationen über das Gasgerät (23, 24) Bilddaten eines Betriebszustands des Gasgeräts (23, 24) umfassen.

7. Gasgerätediagnosesystem (1) nach Anspruch 5,
wobei Informationen über das Gasgerät (23, 24) Bilddaten eines Betriebszustands des Gasgeräts (23, 24) umfassen.

## Revendications

1. Système de diagnostic de défaillance d'un appareil à gaz (1) comprenant :
un compteur à gaz (10) qui mesure un débit de gaz consommé par un appareil à gaz (23, 24) raccordé en aval du compteur à gaz (10), et
un dispositif central (40) qui obtient le débit mesuré par le compteur à gaz (10) par le biais d'une communication ;
le compteur à gaz (10) comprenant un débitmètre (11) qui mesure le débit dans un mode de mesure normal ou un mode de mesure détaillé, le mode de mesure normal étant un mode dans lequel le débit est mesuré dans une période d'échantillonnage prédéterminée, le mode de mesure détaillé étant un mode dans lequel le débit est mesuré dans une période d'échantillonnage plus courte que la période d'échantillonnage prédéterminée du mode de mesure normal,
le dispositif central (40) commandant au compteur à gaz (10) de mesurer le débit en mode de mesure détaillé, recueillant des données de débit consistant en des données concernant le débit mesuré en mode de mesure détaillé en provenance du compteur à gaz, et générant, en fonction des données de débit, des informations de diagnostic de défaillance pour diagnostiquer une défaillance dans l'appareil à gaz (23, 24), et
un procédé de communication réalisé entre le dispositif central (40) et le compteur à gaz (10) consistant en
une communication directe à l'aide d'une ligne téléphonique,
une communication cellulaire par l'intermédiaire d'une station de base, ou
un procédé utilisant un relais multi-étage pour une communication sans fil entre une unité esclave sans fil prévue dans le compteur à gaz et une unité maître, et une connexion internet.

2. Système de diagnostic d'appareil à gaz (1) selon la revendication 1,
dans lequel, en réponse à la commande provenant du dispositif central (40) de mesurer le débit en mode de mesure détaillé, le compteur à gaz (10) détecte la présence d'un flux de gaz et commence à mesurer le débit en mode de mesure détaillé.

3. Système de diagnostic d'appareil à gaz (1) selon la revendication 1,
dans lequel le compteur à gaz (10) comprend un compteur de pression (16) qui mesure la pression du gaz,
le compteur à gaz (10) transmet des données de pression au dispositif central (40) conjointement avec les données de débit, les données de pression étant des données concernant la pression du gaz mesuré, et
le dispositif central (40) génère les informations de diagnostic de défaillance en fonction des données de débit et des données de pression.

4. Système de diagnostic d'appareil à gaz (1) selon la revendication 2,
dans lequel le compteur à gaz (10) comprend un compteur de pression (16) qui mesure la pression du gaz,
le compteur à gaz (10) transmet des données de pression au dispositif central (40) conjointement avec les données de débit, les données de pression étant des données concernant la pression du gaz mesuré, et
le dispositif central (40) génère les informations de diagnostic de défaillance en fonction des données de débit et des données de pression.

5. Système de diagnostic d'appareil à gaz (1) selon l'une quelconque des revendications 1 à 4,
dans lequel le dispositif central (40) commande le compteur à gaz (10) en fonction d'un contact provenant d'un utilisateur propriétaire de l'appareil à gaz (23,24).

6. Système de diagnostic d'appareil à gaz (1) selon l'une quelconque des revendications 1 à 4,
dans lequel des informations concernant l'appareil à gaz (23, 24) comprennent des données d'image relatives à un état de fonctionnement de l'appareil à gaz (23, 24).

7. Système de diagnostic d'appareil à gaz (1) selon la revendication 5,
dans lequel des informations concernant l'appareil à gaz (23, 24) comprennent des données d'image relatives à un état de fonctionnement de l'appareil à gaz (23, 24).
